# EUROPÄISCHE PATENTANMELDUNG

(11) **EP 1 187 035 A1**
(43) Veröffentlichungstag der Anmeldung: **13.03.2002**
(21) Anmeldenummer: 00119576.7
(22) Anmeldetag: 07.09.2000
(51) Int. Cl.: G06F 17/24, G06F 17/60

(54) **Verfahren zum automatischen Schutz von Daten gegen ein unbeabsichtigtes Überschreiben in elektronischen Formularen**

(71) Anmelder: SIEMENS AKTIENGESELLSCHAFT, 80333 München (DE)
(72) Erfinder: Spitz, Gerhard, Dr., 81669 München (DE)

(57) **Zusammenfassung**

Die Erfindung betrifft ein Verfahren, das auf Datenverarbeitungsprogramme anwendbar ist, die eine mehrfache Änderung von Daten (10) durch den Anwender ermöglichen, insbesondere elektronische Formulare verarbeiten, wie Tabellenkalkulationsprogramme. Um ein fehlerhaftes Überschreiben ursprünglich richtiger Daten (10) zu vermeiden, können mit dem erfindungsgemäßen Verfahren aus der Menge der zu verarbeitenden Daten (10), automatisch die kritischen Daten (12) - Daten, die nicht mehr überschrieben werden sollen - ausgewählt werden. Diese kritischen Daten (12) werden automatisch gegen ein ungewolltes Überschreiben gesichert.

## Beschreibung

### Beschreibung

Verfahren zum automatischen Schutz von Daten gegen ein unbeabsichtigtes Überschreiben in elektronischen Formularen

Die Erfindung betrifft ein Verfahren zum Schutz von zu sichernden Daten in Programmen zur Verarbeitung von Daten, bestehend aus zugreifbaren Daten und zu schützenden Daten.

Programme zur Verarbeitung von Daten, die elektronisch erstellte Formulare verwenden, wie beispielsweise Tabellenkalkulationsprogramme, werden häufig so eingesetzt, daß die elektronischen Formulare mehrfach und auch von verschiedenen Anwendern bearbeitet werden. Die Formulare bestehen aus Daten, die verändert werden können und kritischen Daten, d.h. Daten, die nur unter bestimmten Voraussetzungen wieder überschrieben werden sollten, wie z.B. Vorlagen und Berechnungen in Tabellen. Kritische Daten sollten - sind sie einmal eingegeben - bei einer späteren Anwendung des Programmes nicht unbeabsichtigt geändert werden können. Nachteiligerweise gibt es für die kritischen Daten bisher keine automatische Sicherung gegen einen unbeabsichtigten Zugriff. Werden kritische Daten nun unbeabsichtigt und damit fehlerhaft geändert, kann es zu wesentlichen Folgefehlern kommen, die das Gesamtergebnis des Programmes verfälschen, ohne, daß der eigentlich verursachende, kleine Fehler offensichtlich wäre.

Die Hersteller von Programmen, die kritische Daten verarbeiten haben bislang noch keine einheitliche Lösung für dieses Problem, da die Auswahl der kritischen Daten aus der Gesamtmenge der zu verarbeitenden Daten sehr individuell ist. Im einen Fall bestehen die kritischen Daten aus userindividuellen Angaben über Alter, Personalnummer etc. in einem anderen Fall liegt ein kritisches Datum in der Berechnung eines bestimmten Kostenpunktes aufgrund von anderen in dem Programm zu verarbeitenden Daten.

Dies hat dazu geführt, daß die Hersteller dazu übergegangen sind, es dem jeweiligen Anwender im Einzelfall selbst zu überlassen, sich um den Schutz vor einem ungewollten Überschreiben von kritischen Daten zu bemühen.

Bisher fand ein solcher Schutz nur im Einzelfall für jede Programmanwendung gesondert statt. Der Anwender des Programms mußte dabei immer noch einen zusätzlichen Schritt vollziehen und aus der Menge der zu verarbeitenden Daten manuell diejenigen auswählen, die er als kritisch erachtet, um für sie einen Schreibschutz zu definieren. Dabei kommt es natürlich häufiger zu Fehlern, etwa indem bestimmte Daten übersehen werden, die dann später in einer weiteren Anwendung des Programmes mit diesen Daten ungewollt überschrieben werden können.
Diese Problematik trifft für alle Programme zu, die eine elektronisch erstellte Datenstruktur (z.B. Formulare) verwenden, die bei einer späteren Anwendung des Programmes - gegebenenfalls auch von verschiedenen Anwendern - wieder verändert werden können, wie beispielsweise Dokumentenabschnitte in Wordvorlagen, Tabellenblätter und -zellen in Excel etc.

Aufgabe der vorliegenden Erfindung ist es daher, ein Verfahren zur Verfügung zu stellen, das auf verschiedene Programme mit verschiedenen Anwendungen angewendet werden kann, die jeweils kritische Daten verarbeiten, also Daten, die - sind sie einmal eingegeben - nicht mehr geändert werden sollen, so daß die kritischen Daten vor einem ungewollten Zugriff, insbesondere einem Überschreiben, geschützt werden.

Diese Aufgabe wird erfindungsgemäß durch das eingangs erwähnte Verfahren gelöst, insbesondere durch ein Verfahren zum automatisierten Schutz von Daten mit folgenden Schritten:
a) Einlesen der Daten,
b) automatische Identifikation der zu schützenden Daten,
c) Schutz der identifizierten und/oder zu schützenden Daten mittels einer Sicherung gegen einen unbeabsichtigten Zugriff.

In einer bevorzugten Ausführungsform der Erfindung ist das Verfahren auf Programme ausgelegt, die elektronisch erstellte Formulare verarbeiten, wie beispielsweise Tabellenkalkulatonsprogramme.
Hier wird üblicherweise für eine Anwendung über das Programm ein Formular erstellt, in das Daten eingegeben oder aus anderen Programmen eingelesen werden. Andere Daten werden aufgrund dieser Daten berechnet. Handelt es sich beispielsweise um die Anwendung in der Kostenrechnung, so wird z.B. in einem Feld - abhängig von einem Wert - die Mehrwertsteuer von diesem Betrag berechnet. Die grundlegende Überlegung für die erfindungsgemäße Lösung liegt nun darin, daß bei späteren Anwendungen zwar der Wert einem Zugriff zugänglich sein soll, nicht jedoch die Berechnung, sozusagen die zugrundeliegende Formel für die Mehrwertsteuer. Dieses Datum ist also ein kritisches Datum und sollte vor einem ungewollten Zugriff, wie z.B. einem Überschreiben, durch einen Anwender des Programmes geschützt werden. Doch auch andere Daten sind kritisch. So kann in der Personalverwaltung eine Kalkulation notwendig sein, die die Personalnummern der Mitarbeiter erfaßt. Diese sollte - sofern sie einmal korrekt eingegeben ist, auch nicht wieder überschrieben werden können.
Erfindungsgemäß werden diese kritischen Daten automatisch erfaßt und mit einem Schutz versehen. Der Anwender muß also nicht bei jeder Anwendung die kritischen Daten manuell identifizieren und diese dann noch speziell gegen Änderungen und/oder einem Lesezugriff schützen.

Das Verfahren ist grundsätzlich ausgelegt, um Daten automatisch vor einem unbeabsichtigten Zugriff zu schützen, der in einem Schreibzugriff und/oder in einem Lesezugriff bestehen kann.
Der zuletzt genannte Fall ist beispielsweise dann sinnvoll, wenn bestimmte Formeln in einem Tabellenkalkulationsformular nicht an den Kunden weitergeleitet werden sollen , die Berechnung - also sozusagen das Ergebnis - aber zur Verfügung gestellt werden soll. Dann werden die Datenfelder, die auf einer Berechnung basieren erfindungsgemäß automatisch ausgewählt und automatisch mit einem Leseschutz versehen, so daß nur das Ergebnis der Berechnung sichtbar wird.

Eine vorteilhafte, alternative Ausführungsform der Erfindung besteht darin, daß bei diesem Verfahren Klassen von Anwendern definiert werden können, für die jeweils unterschiedliche Ausprägungen eines Schutzes eingerichtet werden können. Je nach Klassenzugehörigkeit hat der Anwender dann eine Menge von kritischen Daten, die von Klasse zu Klasse variieren können. Bleibt man beim oben dargestellten Beispiel der elektronischen Personalverwaltung, dann ist es sinnvoll, eine Klasse von Usern als sog. "Super User" einzurichten, beispielsweise die Verantwortlichen in der Personalabteilung, die grundsätzlich die Berechtigung haben, alle Daten abändern zu können. Neben dieser Klasse wird eine weitere Klasse der Anwender eingerichtet, z.B. die einzelnen Mitarbeiter. Denn es ist erwünscht, daß der jeweilige Mitarbeiter Zugriff auf (ausgewählte) Daten bekommt, die er auch verändern können soll, z.B. Informationen über die von ihm bearbeiteten Projekte etc.
Das erfindungsgemäße Verfahren läßt sich natürlich auch hierarchisch gestaffelt einsetzen. Möchte der Mitarbeiter nun in demselben Formular weitere Informationen hinzufügen, die beispielsweise in codierter Form hinterlegt werden sollen, so kann das erfindungsgemäße Verfahren angewendet werden, indem die codierten Einträge von ihm oder wahlweise auch für Dritte nur auf gesonderte Bestätigung hin verändert werden können, um ein ungewolltes Überschreiben dieser Einträge und damit Fehler zu vermeiden.

Eine weitere besonders bevorzugte Ausführungsform des erfindungsgemäßen Verfahrens umfaßt eine graphische Oberfläche, die bei dem intendierten Verändern eines identifizierten kritischen Datums erscheint. Hier wird der Anwender aufgefordert, zu bestätigen, daß er tatsächlich eine Änderung des kritischen Datums wünscht und daß damit möglicherweise ein Datenverlust einher geht. Erst wenn der Anwender dies bestätigt hat und seine Berechtigung für den Zugriff auf dieses Datum vorhanden ist, kann er das Datum überschreiben. Dies erhöht vorteilhafterweise die Sicherheit und Zuverlässigkeit des Systems.

Eine sich in der Praxis als sehr vorteilhaft erweisende Ausführungsform der vorliegenden Erfindung betrifft die zusätzliche optionale manuelle Identifikation von kritischen Daten. Dies ist beispielsweise in den Fällen sinnvoll, in denen der Anwender bestimmen möchte, daß ein üblicher Datensatz, der nicht automatisch identifiziert worden ist, trotzdem nicht mehr überschrieben werden soll. Hierdurch verfügt der Anwender über zusätzlich Eingriffsmöglichkeiten und ist nicht durch die erfindungsgemäßen Identifikationsroutinen festgelegt.
Vorteilhafterweise wird erfindungsgemäß auch der Fall unterstützt, daß der Anwender dieses zusätzliche Feature der automatischen Identifikation wahlweise zu- und abschalten kann. Sollen beispielsweise bei einem Formblatt alle bisherigen Einträge nochmals gezielt überarbeitet und erneuert werden, so ist es hilfreich, daß nicht jedesmal erneut die Bestätigung für das gewünschte Überschreiben eingegeben werden muß. Die Identifikation der kritischen Daten erfolgt erfindungsgemäß mit einer semantischen und syntaktischen Analyse der einzelnen Daten bzw. Datenfelder. Ergibt sich hierbei, daß es sich um eine Formel, um einen numerischen Wert oder um einen Datensatz mit einem spezifischen Format handelt, oder einen Datensatz, dessen Inhalt wiederum von anderen Werten errechnet wird oder von diesen abhängt, so wird er als kritisch identifiziert. vorteilhafterweise erfolgt diese Bestimmung automatisiert, so daß der Anwender keine Vorkehrungen für die Selektion der kritischen Daten aus der Gesamtmenge der Daten zu treffen hat.

Weitere Vorteile der Erfindung und besondere Ausführungsformen mit deren Merkmalen sind in der nachfolgenden detaillierten Figurenbeschreibung dargestellt. Darin zeigt:
Fig. 1 eine schematische Darstellung eines erfindungsgemäßen Ablaufes
Fig.2 eine Darstellung eines Formulars mit erfindungsgemäß identifizierten Daten.

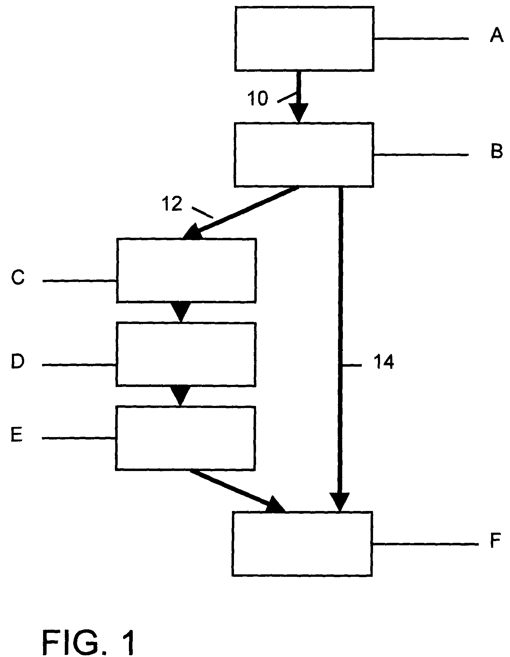

Im Folgenden wird einleitend und unter Bezugnahme zu Fig. 1 der allgemeine Ablauf des erfindungsgemäßen Verfahrens vorgestellt.
Viele auf dem Markt befindliche Software Lösungen erstellen und verarbeiten elektronische Formulare 16, die in späteren Sitzungen von demselben oder anderen Anwendern weiter bearbeitet werden sollen. Dazu werden Daten 10 vom Anwender manuell eingegeben oder alternativ über eine Schnittstelle von anderen Programmen automatisiert eingelesen (Schritt A).
In der bevorzugten Ausführungsform der Erfindung wird das erfindungsgemäße Verfahren auf ein Tabellenkalkulationsprogramm angewendet. Hier wird z.B. vom Super-User ein Formular erstellt, das neben Daten 10 Formeln und Berechnungen beinhaltet. Je nach Anwendung des Programmes liegt der Schwerpunkt der Arbeit in der Wahl der Berechnungen - beispielsweise Arbeitszeitberechnungen unter Berücksichtigung von Angaben über Pausen und festgelegten Arbeitszeiten oder Finanzierungsberechnungen unter Berücksichtigung von Angaben über Zinsen, Kapital - etc. Dieses Formular 16 wird dann (auf elektronischen Wege) an den Anwender "verteilt", der wiederum Daten 10 in das Formular 16 einträgt. Gibt der Anwender nun versehentlich Daten 10 in das Formularfeld ein, das eine Berechnung enthält, so wird diese zerstört und damit eventuelle Folgeberechnungen aufgrund dieses Wertes. Dieser Fehler wird durch den automatischen Schutz nach dem erfindungsgemäßen Verfahren sicher vermieden.

Wird das Tabellenkalkulationsprogramm beispielsweise angewendet, um ein Kostenblatt zu erstellen, so bestehen die Daten 10 in Angaben zu einzelnen Kostenpositionen, die variabel verändert werden müssen und solchen, die aus diesen Kosten errechnet werden, wie beispielsweise Mehrwertsteuer, Umsatzsteuer, Zwischensummen und Gesamtsumme etc. Die einzelnen Kostenpositionen sind unkritischen Daten 14, nämlich solche, die einer Änderung zugänglich sein sollen und von daher überschrieben werden können müssen. Die anderen Daten sind jedoch als kritische Daten 12 einzustufen, da sie z.B. durch eine Formel aus anderen Daten 12 berechnet werden. Dem Datenfeld MEHRWERTSREUER liegt z.B. folgende Formel zugrunde "16% * 'Wert eines Datenfeldes ZWISCHENSUMME' ". Soll nun der Wert des Datenfeldes ZWISCHENSUMME geändert werden, so soll sich nur der Wert des Datenfeldes MEHRWERTSTEUER ändern, nicht aber dessen Berechnung. Daher gehört das Datenfeld MEHRWERTSTEUER zu den kritischen Daten 12.
Das erfindungsgemäße Verfahren erkennt nun automatisch in Schritt B die kritischen Daten 12 und selektiert diese aus der Menge der Daten 10 heraus.
Anschließend findet in Schritt C ein Schutz der kritischen Daten 12 gegen einen unbeabsichtigten Zugriff, insbesondere gegen ein Überschreiben, statt.
Vorteilhafterweise werden die als kritisch erkannten Daten - in Schritt D - für den Anwender kenntlich gemacht, z.B. farbig hinterlegt oder schattiert dargestellt.
Möchte der Anwender nun kritische Daten 12 ändern, so erscheint - in Schritt E - vorzugsweise eine Oberfläche 18 (nicht dargestellt), die den Anwender jeweils auf die kritische Eigenschaft des Datums hinweist und ihn zu einer Bestätigung für das Ändern dieses Datums auffordert.
Das Verfahren prüft dann in Schritt E, ob der Anwender auch eine Berechtigung zur Änderung des ausgewählten Datums hat. Ist die Zugriffsberechtigung vorhanden, fährt das Programm mit dem Zugriff, z.B. mit dem Überschreiben, des Datums fort. Liegt keine Zugriffsberechtigung vor, bleiben die Daten unverändert und/oder die zugrundeliegende Berechnung wird nicht angezeigt.
Daran schließt sich in Schritt F die übliche Weiterverarbeitung der Daten 10 an. In Schritt F werden ebenfalls die in Schritt B als unkritisch identifizierten Daten 14 verarbeitet.

Ebenso liegt es im Rahmen der Erfindung, zu schützende, kritische Daten 12 gegen einen unbeabsichtigten Lesezugriff zu schützen. Dies ist beispielsweise dann erforderlich, wenn ein elektronisch erstelltes Formular 16 aus einem Tabellenkalkulationsprogramm zwar (z.B. an Kunden) weitergegeben werden soll, die detaillierten Berechnungen aber nicht zugänglich sein sollen und deshalb vor einem Zugriff (hier: Lesezugriff) zu schützen sind. Dann kann der Kunde nur den Wert des jeweiligen Datenfeldes ersehen, nicht aber dessen zugrundeliegende Formel.
Daraus ergibt sich der in der Praxis wichtige Vorteil, daß nicht nur - wie bisher- ein kompletter Leseschutz für das gesamte Formular 16 eingestellt werden kann, sondern, daß ein selektiver, partieller Leseschutz für ausgewählte Datengruppen möglich ist.
Die automatische Identifikation der kritischen Daten 12 erfolgt anhand eine Menge von Regeln. Diese Regeln basieren auf einer semantischen und syntaktischen Analyse der jeweils zu prüfenden Daten 10. Im folgenden seien Beispiele für mögliche Regeln aufgeführt:
- 'Liegt eine Formel / Berechnung vor ? -> es handelt sich um ein kritisches Datum',
- 'Besteht der Eintrag aus mathematischen Operatoren? -> es handelt sich um ein kritisches Datum',
- 'Ist der Eintrag spezifisch formatiert? -> es handelt sich um ein kritisches Datum',
- 'Besteht das Datum aus numerischen Zeichen ? -> es handelt sich um ein kritisches Datum',
- 'Ist das Datum von einer Gruppe von vorbestimmten Anwendern erstellt worden? -> es handelt sich um ein kritisches Datum',
- 'Ist das Datum zumindest Teil einer Information, die sich auf einen vorbestimmten Inhalt bezieht (z.B. Personalangabe)? -> es handelt sich um ein kritisches Datum' etc.

Eine bevorzugte Ausführungsform der Erfindung ist darin zu sehen, daß das Verfahren über sogenannte Regelklassen verfügt, die für die Identifizierung der kritischen Daten 12 in Schritt B herangezogen werden. Eine Klasse von Regeln enthält dabei eine oder mehrere Variablen, deren Wert aufgrund der aktuellen Anwendung des Programmes bestimmt wird. Bei den oben beispielhaft aufgezählten Regeln sind das die folgenden:
- 'Ist das Datum von einer Gruppe von vorbestimmten Anwendern erstellt worden? -> es handelt sich um ein kritisches Datum',
- 'Ist das Datum zumindest Teil einer Information, die sich auf einen vorbestimmten Inhalt bezieht (z.B. Personalangabe)? -> es handelt sich um ein kritisches Datum'. Die Variablen sind hier 'vorbestimmter Anwender' und 'vorbestimmter Inhalt'. Je nach Anwendung werden diese Variablen anhand einer Schutzparameter Oberfläche vom Anwender definiert. Damit kann vorteilhafterweise eine gezielte, an den jeweiligen Anwendungsfall angepaßte Identifikation der kritischen Daten 12 erreicht werden.

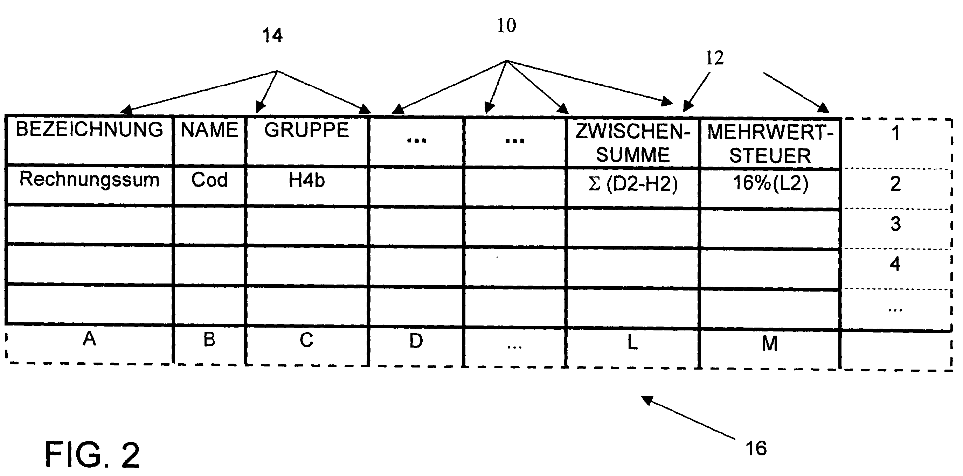

In Figur 2 ist ein Beispiel eines elektronisch erstellten Formulars 16 abgebildet, bei dem mit Hilfe des erfindungsgemäßen Verfahrens die kritischen Daten 12 gegen ein ungewolltes Überschreiben oder Lesen geschützt sind.
Doch nicht nur am Beispiel der Tabellenkalkulation kommt das erfindungsgemäße Verfahren zum Einsatz, sondern ebenfalls bei allen Programmen zur Verarbeitung von Daten 10, die auf vom Anwender veränderbaren Datenstrukturen aufsetzen und bei denen deshalb die Schwierigkeit besteht, eine Teilmenge der Daten 10 gegen einen ungewollten Zugriff abzusichern, wie in Vorlage-Dokumenten in der Textverarbeitung, in Organisationsprogrammen, in Zeitplanprogrammen und dergleichen.

Erfindungsgemäß beinhaltet das Verfahren die Möglichkeit einer Einstellung, ob die Identifikation in Schritt B für jede Anwendung des Programmes nur einmal oder mehrfach ausgeführt werden soll. Beispielsweise kann bei einem Formular 16 in der Tabellenkalkulation, das Kosten berechnet und verwaltet, festgelegt werden, daß die automatische Identifikation und der automatische Schutz gegen das Überschreiben für jede Anwendung und jeden Dateneintrag nur einmal erfolgt. Dies wird vorzugsweise nur bei einem Schutz vor einem ungewollten Schreibzugriff eingesetzt. Alternativ kann definiert werden, daß das erfindungsgemäße Verfahren bei jeder intendierten Änderung (hier: Schreibzugriff) ablaufen soll.

Bisher erfolgte die Sicherung von kritischen bzw. zu schützenden Daten 12 oder von Daten, für die nur ausgewählte Anwender des Programmes die Berechtigung haben, diese zu ändern (z.B. dem Superuser) manuell, beispielsweise über eine Makroprogrammierung.
Eine automatische Selektion von kritischen Daten 12 und unkritischen Daten 14 war nicht möglich. Diese Selektion findet erfindungsgemäß anhand von einer Menge von Regeln statt, die ihrerseits vom Anwender für den speziellen Anwendungsfall des Programmes erweitert werden kann.

Vorteilhafterweise wird das erfindungsgemäße Verfahren bei allen Eingabeformularen zur Datenerfassung angewendet. Hier muß der Anwender seine persönlichen Daten in die entsprechenden Zellen eintragen. Die anderen Zellen, etwa global relevante Daten oder Daten von anderen Anwendern sollen von ihm nicht verändert bzw. gelesen werden können.
Die automatische Identifikation basiert auf der Menge von Regeln. Diese umfassen in diesem Fall ein Erfassen der Zugriffsberechtigung des jeweiligen Anwenders auf die Zelle.

Liegt keine Zugriffsberechtigung für die Zelle vor, so wird das Datum der Zelle als kritisches Datum identifiziert.

In einer alternativen Ausführungsform der Erfindung umfaßt die automatische Identifikation aufgrund der Menge von Regeln eine Wichtung der einzelnen Regeln.
So läßt sich z.B. festlegen, daß grundsätzlich und vornehmlich alle numerischen Daten, die zusammen mit mathematischen Operatoren in einer Zelle stehen und alle weiteren Regeln für die Erkennung von Berechnungen automatisch identifiziert und mit einem Schreibschutz hinterlegt werden sollen. Dann hat die Regel zur Erkennung von Berechnungen und Formeln die höchste Priorität und die anderen Regeln werden niedriger eingestuft. Dieses Vorgehen ist vor allem für Tabellenkalkulationsprogramme sinnvoll.

Vorteilhafterweise sieht das erfindungsgemäße Verfahren das Feature vor, den automatischen Zugriffsschutz gezielt zu aktivieren oder zu deaktivieren. Dies ist beispielsweise sinnvoll, wenn ein Anwender - nämlich der Ersteller des Formulars 16 - bei der Erst-Erstellung des jeweiligen Datenblattes nicht bei jeder Neueingabe (und damit einer Änderung) einer Datenzelle, eine Bestätigung eingeben muß, daß er es auch tatsächlich beabsichtigt, den Wert dieser Zelle zu ändern. Hier wird der Schreibschutz vorteilhafterweise deaktiviert.

Alternativ oder kumulativ kann das erfindungsgemäße Verfahren bei einer Anwendung des Programmes mit ein und demselben Datenblatt für unterschiedliche Anwender auch so eingesetzt werden, daß der Schreibschutz nicht vom Anwender ein und aus geschaltet werden kann, sondern vom Super User festgelegt wird, welcher Anwender welche Zugangsberechtigung für die jeweiligen Daten hat ,so daß bei fehlender Berechtigung automatisch der Schreibschutz aktiviert ist.

Eine besonders vorteilhafte Ausführungsform des erfindungsgemäßen Verfahrens umfaßt im Fall von Multi-User-Systemen, wie z.B. Unix Systemen, die Funktionalität, die Berechtigung des Anwenders automatisch zu erfassen und den Schreibschutz dann automatisch zu aktivieren, wenn keine Berechtigung zum Überschreiben für dieses Datum vorliegt. Bei diesen Systemen kann aufgrund des Aufrufs des Programmes von einem bestimmten Rechner ein Rückschluß auf den Anwender getroffen werden. Daraus kann das System dessen Berechtigung ableiten und automatisch nur die Daten für einen Zugriff freigeben, für die der jeweilige Anwender eine Berechtigung hat.

Die Hauptanwendung des erfindungsgemäßen Verfahrens liegt jedoch in der Ausgestaltung als "Add-On" zu auf dem Markt eingesetzten Tabellenkalkulationsprogrammen.
Dabei umfaßt das Verfahren vorzugsweise folgenden Ablauf:
1. Der Super-User erstellt ein Formular 16 für den jeweiligen Anwendungsfall.
2. Das Formular 16 wird an die verschiedenen Anwender verteilt.
3. Der Super-User modifiziert das Formular 16, indem er einige Berechnungen in Form von Formeln ändert.
4. Das neue Formular 16 (mit der neuen Formel) wird automatisch schreibgeschützt an die Anwender verteilt.
5. Die Anwender geben Daten 10 in das Formular 16 ein.

Erfindungsgemäß sind verschiedene Ausführungsform vorgesehen, um die identifizierten, zu schützenden Daten 12 mittels einer Sicherung gegen ein ungewolltes Überschreiben zu schützen. Eine Möglichkeit besteht darin, eine Bestätigung des Anwenders zu überwachen. Erfolgt die Bestätigung, kann das identifiziert und kritische Datum 12 verändert werden. Erfolgt die Bestätigung nicht, bleibt das Datum 12 unverändert.
Eine andere Möglichkeit liegt darin, einen Paßwortschutz vorzusehen. Hier werden die kritischen Daten 12 automatisch geschützt, indem die kritischen Daten 12 nur nach Eingabe eines Paßwortes vom jeweiligen Anwender verändert werden können. Alternativ kann der Anwender den automatischen Schreibschutz wahlweise aktivieren oder deaktivieren. Er kann dies vorteilhafterweise wahlweise für den gesamten zu verarbeitenden Datensatz bzw. für das vollständige Formular 16 festlegen oder nur für einzelne auszuwählende Klassen von Daten (z.B. eine Spalte oder Zeile in dem Formular) oder nur für einzelne, spezielle Daten.

Die Sicherung gegen einen ungewollten Zugriff, insbesondere gegen ein Überschreiben, erfolgt dadurch, daß die Zugangsberechtigung des Anwenders für die jeweiligen Datenzellen erfaßt wird.

Das Verfahren ist grundsätzlich bei allen Programmen zur Verarbeitung von Daten 10 anwendbar, die dazu bestimmt sind, zumindest einen Teil der eingelesenen und/oder verarbeiteten Daten 10 in einer späteren Anwendung erneut zu verarbeiten, wie insbesondere Textvorlagen, Tabellen und Formulare und/oder bei denen mehrere Anwender Zugriff auf ein Datenblatt haben.

## Patentansprüche

1. Verfahren zum Schutz von zu schützenden Daten (12) in Programmen zur Verarbeitung von Daten (10), bestehend aus zugreifbaren Daten (14) und zu schützenden Daten (12), mit folgenden Schritten:
a) Einlesen der Daten (10),
b) automatische Identifikation der zu schützenden Daten (12),
c) Schutz der identifizierten und/oder zu schützenden Daten (12) mittels einer Sicherung gegen einen unbeabsichtigten Zugriff.

2. Verfahren nach Anspruch 1,
**dadurch gekennzeichnet, daß**
das Verfahren innerhalb des Programmes für einzelne Klassen von Daten (10) jeweils wahlweise aktivierbar und deaktivierbar ist.

3. Verfahren nach mindestens einem der vorstehenden Ansprüche,
**dadurch gekennzeichnet, daß**
der Schutz der identifizierten Daten automatisch erfolgt.

4. Verfahren nach mindestens einem der vorstehenden Ansprüche,
**dadurch gekennzeichnet, daß**
wahlweise und/oder zusätzlich ein manueller Schutz der zu schützenden Daten (12) erfolgt.

5. Verfahren nach mindestens einem der vorstehenden Ansprüche,
**dadurch gekennzeichnet, daß**
der unbeabsichtigte Zugriff ein Schreibzugriff ist und das Verfahren schreibgeschützte Daten (12) schützt.

6. Verfahren nach Anspruch 5,
**dadurch gekennzeichnet, daß**
die Sicherung gegen einen unbeabsichtigten Zugriff folgendes umfaßt:
Aufrufen einer Oberfläche (18), die einen Anwender zu einer Bestätigung eines Änderungswunsches der zu schützenden Daten (12) auffordert.

7. Verfahren nach mindestens einem der vorstehenden Ansprüche,
**dadurch gekennzeichnet, daß**
der unbeabsichtigte Zugriff ein Lesen der Daten (12) betrifft und das Verfahren lesegeschützte Daten (12) schützt.

8. Verfahren nach mindestens einem der vorstehenden Ansprüche,
**dadurch gekennzeichnet, daß**
daß die Identifizierung der zu schützenden Daten (12) über eine semantische und/oder syntaktische Analyse der Daten (10) erfolgt, insbesondere mittels Erkennen von Formeln und von numerischen und/oder spezifisch formatierten Daten (10) und/oder von Erfassen von Zugriffsberechtigungen der Anwender.

9. Verfahren nach mindestens einem der vorstehenden Ansprüche,
**dadurch gekennzeichnet, daß**
das Einlesen der Daten (10) über eine Dateneingabe eines Anwenders erfolgt.

10. Verfahren nach mindestens einem der vorstehenden Ansprüche,
**dadurch gekennzeichnet, daß**
das Einlesen der Daten (10) automatisch über eine Schnittstelle zu anderen Programmen erfolgt.

11. Verfahren nach mindestens einem der vorstehenden Ansprüche,
**dadurch gekennzeichnet, daß**
das Verfahren einen weiteren Schritt umfaßt:
d) Anzeigen der identifizierten Daten.
